# EUROPEAN PATENT APPLICATION

(11) **EP 4 679 808 A1**
(43) Date of publication of application: **14.01.2026**
(21) Application number: 25157342.4
(22) Date of filing: 12.02.2025
(51) Int. Cl.: H04N 1/00, G03G 15/00

(54) **IMAGE DIAGNOSIS SYSTEM AND IMAGE DIAGNOSIS METHOD**

(30) Priority: 08.07.2024 JP 2024109790
(71) Applicant: Fujifilm Business Innovation Corp., Tokyo 107-0052 (JP)
(72) Inventor: KANEKO, Atsuki, Yokohama (JP); OKI, Tomoya, Yokohama (JP); MIYAMORI, Shinya, Yokohama (JP)
(74) Representative: Meissner Bolte Partnerschaft mbB

(57) **Abstract**

An image diagnosis system includes one or more processors configured to: acquire an image for image diagnosis formed by an image forming apparatus serving as a diagnosis target; detect, from the image for image diagnosis, an image-quality defect in the image for image diagnosis; and perform switching of highlighting of an occurrence location of the detected image-quality defect, the switching being performed on a basis of an event.

## Description

### Background

### (i) Technical Field

The present disclosure relates to an image diagnosis system and an image diagnosis method.

### (ii) Related Art

Japanese Unexamined Patent Application Publication No. 2022-41718 describes an issue in detecting image defects by using detection processes of multiple types, the issue concerning providing a scheme for outputting each image defect with an identifiable detection process type. To address the issue, Japanese Unexamined Patent Application Publication No. 2022-41718 discloses displaying the overall image of an inspection target image on the result display screen and also highlighting a detected defect by using a color representing a used defect detection process.

### Summary

For example, if an image forming apparatus of a customer has trouble, an image diagnosis system that diagnoses an anomaly in the image forming apparatus is utilized for a customer engineer to cope with the trouble rapidly. The image diagnosis system, for example, the characteristics of a dot or a line present in the image and identifies an image-quality defect caused by image forming or image reading. By using the image diagnosis system, the customer engineer identifies a malfunctioning component and determines a solution from the image-quality defect. At this time, even if the image-quality defect is highlighted in the image output as an image diagnosis result, the image-quality defect is displayed simply according to the type of the image-quality defect in the related art. Accordingly, in the related art, the customer engineer is required to verify the trouble in such a manner as to measure the image-quality defect one by one in the displaying.

Accordingly, it is an object of the present disclosure to reduce a burden on a customer engineer in comprehending an image-quality defect in image diagnosis.

According to a first aspect of the present disclosure, there is provided an image diagnosis system including one or more processors configured to: acquire an image for image diagnosis formed by an image forming apparatus serving as a diagnosis target; detect, from the image for image diagnosis, an image-quality defect in the image for image diagnosis; and perform switching of highlighting of an occurrence location of the detected image-quality defect, the switching being performed on a basis of an event.

According to a second aspect of the present disclosure, in the image diagnosis system according to the first aspect, the event is one of multiple image-quality defects of multiple types, and the highlighting is performed of an image-quality defect of one type among the image-quality defects of the multiple types, and the image-quality defect of one type is discriminated from an image-quality defect of a different type in the highlighting.

According to a third aspect of the present disclosure, in the image diagnosis system according to the first or second aspect, a form of the highlighting varies depending on a characteristic of the image-quality defect of one type.

According to a fourth aspect of the present disclosure, in the image diagnosis system according to the first aspect, the event is one of multiple image-quality defects of one type, and the highlighting is performed of each of the multiple image-quality defects of one type in a switching manner.

According to a fifth aspect of the present disclosure, in the image diagnosis system according to the fourth aspect, a form of the highlighting varies depending on a characteristic of the image-quality defect.

According to a sixth aspect of the present disclosure, in the image diagnosis system according to the fifth aspect, the characteristic of the image-quality defect lies in a size of the image-quality defect.

According to a seventh aspect of the present disclosure, in the image diagnosis system according to the fifth aspect, the characteristic of the image-quality defect lies in a cycle in which the image-quality defect is displayed.

According to an eighth aspect of the present disclosure, in the image diagnosis system according to the first aspect, discrimination information for discriminating the image-quality defect is acquired as the image for image diagnosis formed by the image forming apparatus, and the discrimination information is displayed with the highlighting.

According to a ninth aspect of the present disclosure, in the image diagnosis system according to the eighth aspect, the discrimination information is information for discriminating a defect attributed to formation of an image in a specific color among images in multiple colors or a defect attributed to different image formation other than the formation of the image in the specific color.

According to a tenth aspect of the present disclosure, in the image diagnosis system according to any one of the eighth to ninth aspects, a single-sided printed image and a double-sided printed image serves as the discrimination information.

According to an eleventh aspect of the present disclosure, in the image diagnosis system according to any one of the eighth to tenth aspects, the discrimination information is information for discriminating a defect attributed to reading by the image forming apparatus.

According to a twelfth aspect of the present disclosure, there is provided an image diagnosis method including: acquiring an image for image diagnosis formed by an image forming apparatus serving as a diagnosis target; detecting, from the image for image diagnosis, an image-quality defect in the image for image diagnosis; and performing switching of highlighting of an occurrence location of the detected image-quality defect, the switching being performed on a basis of an event.

According to the first and twelfth aspects of the present disclosure, a burden on a customer engineer in comprehending the image-quality defect may be reduced in the image diagnosis.

According to the second aspect of the present disclosure, a user may easily pay attention on the image-quality defect of one type.

According to the third aspect of the present disclosure, the image-quality defect may be uniquely identified for each type of the image-quality defect.

According to the fourth aspect of the present disclosure, the user may easily pay attention on the individual image-quality defects.

According to the fifth aspect of the present disclosure, a difference among the individual image-quality defects may be easily comprehended.

According to the sixth aspect of the present disclosure, the user may be helped in comprehending the seriousness of the image-quality defect.

According to the seventh aspect of the present disclosure, the user may easily verify that the image-quality defect occurs due to the same cause.

According to the eighth aspect of the present disclosure, the user may easily comprehend an image-quality defect related to a specific image.

According to the ninth aspect of the present disclosure, a defect attributed to the formation of the image in the specific color may be clarified more for the user.

According to the tenth aspect of the present disclosure, the user may verify a defect attributed to a transfer part in a distinguished manner.

According to the eleventh aspect of the present disclosure, the user may verify a defect attributed to reading in a distinguished manner.

### Brief Description of the Drawings

An exemplary embodiment of the present disclosure will be described in detail based on the following figures, wherein:
Fig. 1 is a view illustrating an image diagnosis system in this exemplary embodiment;
Fig. 2 is a view illustrating an example hardware configuration of a server apparatus;
Fig. 3 is a view for explaining an image forming apparatus;
Fig. 4 is a view illustrating the functional configuration of the server apparatus;
Fig. 5 is a flowchart illustrating a process by the server apparatus;
Fig. 6 is a view illustrating diagnosis results output by the server apparatus;
Fig. 7 is a view illustrating Modification 1 of the diagnosis results output by the server apparatus;
Figs. 8A and 8B are each a view illustrating Modification 2 of the diagnosis results output by the server apparatus;
Fig. 9 is a view illustrating Modification 3 of the diagnosis results output by the server apparatus; and
Fig. 10 is a view illustrating Modification 4 of the diagnosis results output by the server apparatus.

### Detailed Description

Hereinafter, an exemplary embodiment of the present disclosure will be described with reference to the drawings.

### Image Diagnosis System

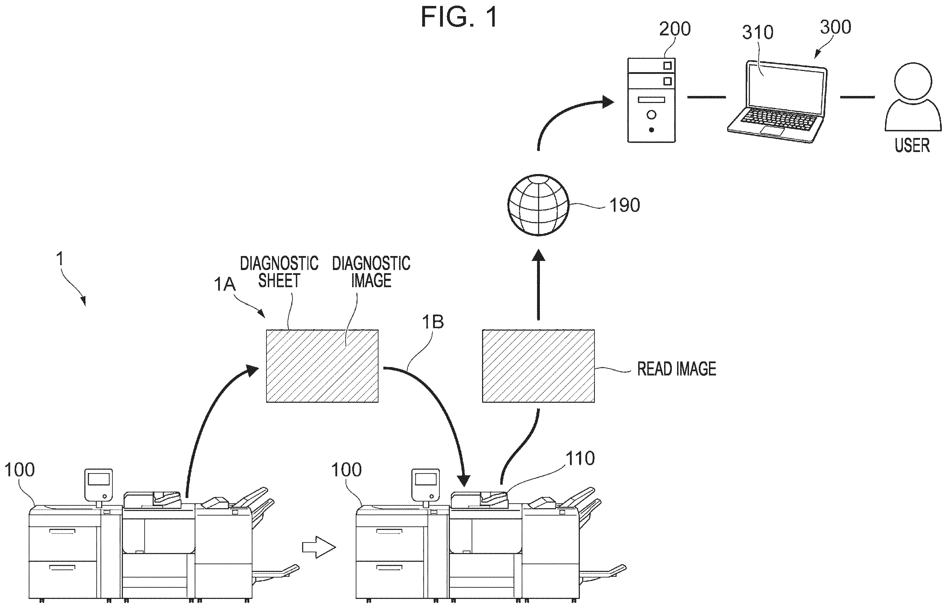

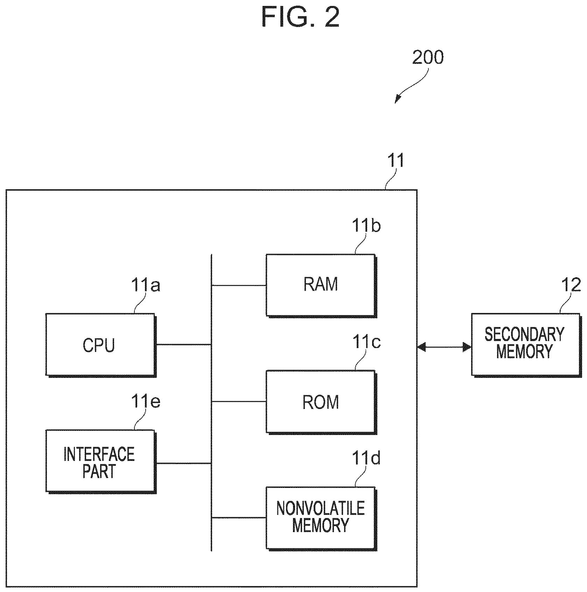

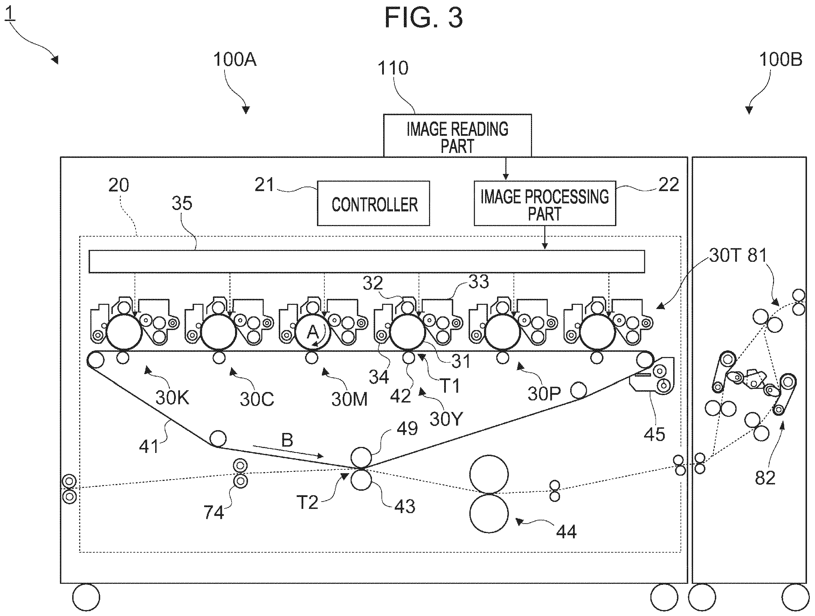

Fig. 1 is a view illustrating an image diagnosis system 1 in this exemplary embodiment. Fig. 2 is a view illustrating an example hardware configuration of a server apparatus 200. Fig. 3 is a view for explaining an image forming apparatus 100.

The image diagnosis system 1 of this exemplary embodiment has the image forming apparatus 100 that forms an image on the sheet and the server apparatus 200 connected to the image forming apparatus 100 via a communication network 190. In this exemplary embodiment, the image diagnosis of the image diagnosis system 1 is performed by the server apparatus 200. Further, the image diagnosis system 1 has a user terminal 300 that is connected to the server apparatus 200 and that receives operation from a user.

The user terminal 300 has a display 310. The user terminal 300 is implemented by a computer. For example, a personal computer (PC), a smartphone, and a tablet terminal are cited as forms of the user terminal 300.

The server apparatus 200 is implemented by a computer.

As illustrated in Fig. 2, the server apparatus 200 has an arithmetic processing part 11 that performs digital arithmetic processing in accordance with a program and a secondary memory 12 that stores information. A controller 21 of the image forming apparatus 100 (described later) has the same configuration.

The secondary memory 12 is implemented by an existing information storage device such as a hard disk drive (HDD), a semiconductor memory, or a magnetic tape.

The arithmetic processing part 11 has a CPU 11a as an example of a processor.

The arithmetic processing part 11 also has a RAM 11b used as a work memory or the like of the CPU 11a and a ROM 11c storing a program and the like run by the CPU 11a.

The arithmetic processing part 11 also has a nonvolatile memory 11d configured to be rewritable and capable of holding data even if power supply is stopped and an interface part 11e that performs control of components such as a communication part connected to the arithmetic processing part 11.

The nonvolatile memory 11d is configured as, for example, a SRAM backed up by a battery, a flash memory, or the like. For example, the nonvolatile memory 11d stores association of an image-quality defect (described later) with highlighting. The nonvolatile memory 11d also stores, for example, a diagnostic image (described later). The secondary memory 12 stores not only a file but also a program run by the arithmetic processing part 11.

In this exemplary embodiment, processes are executed in such a manner that the arithmetic processing part 11 loads a program stored in the ROM 11c or the secondary memory 12.

The program run by the CPU 11a may be provided to the server apparatus 200 in a state of being stored in a computer readable recording medium such as a magnetic recording medium (such as a magnetic tape or a magnetic disk), a magneto-optical recording medium, an optical recording medium (such as optical disk), or a semiconductor memory. The program run by the CPU 11a may also be provided to the server apparatus 200 by using communication means such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

A process to be executed by the image forming apparatus 100 among processes described below is executed by a CPU 11a provided in the controller 21 of the image forming apparatus 100. In addition, a process to be executed by the server apparatus 200 among the processes described below is executed by the CPU 11a serving as an example of a processor provided in the server apparatus 200.

In addition, a process related to the image diagnosis in the image diagnosis system 1 among the processes described below is executed by the server apparatus 200. The process related to the image diagnosis in the image diagnosis system 1 may be implemented by the one server apparatus 200 or multiple apparatuses.

As illustrated in Fig. 3, the image forming apparatus 100 according to this exemplary embodiment has a printing unit 100A and a discharging unit 100B. The image forming apparatus 100 also has an image reading part 110 that reads an image formed on the sheet, such as a chart image. The sheet is an example of a recording material.

The printing unit 100A has an image forming part 20 that forms an image on the sheet. The printing unit 100A also has the controller 21 that performs control of the components of the image forming apparatus 100.

The printing unit 100A also has an image processing part 22. The image processing part 22 performs image processing on image data transmitted from the image reading part 110.

The image reading part 110 is a so-called scanner. The image reading part 110 has a light source that emits light to be radiated onto a sheet and a light receiving part such as a CCD that receives light reflected from the sheet. In this exemplary embodiment, read image data (described later) is generated on the basis of the reflected light received by the light receiving part.

The image forming part 20 has six image forming units 30T, 30P, 30Y, 30M, 30C, and 30K (hereinafter, simply referred to as image forming units 30 on occasions) disposed in parallel at regular intervals.

Each image forming unit 30 has a photoconductor drum 31 that rotates in an arrow A direction and on which an electrostatic latent image is formed. The image forming unit 30 also has a charging roller 32 that charges the surface of the photoconductor drum 31. Further, the image forming unit 30 has a developer 33 that develops the electrostatic latent image formed on the photoconductor drum 31. The image forming unit 30 also has a drum cleaner 34 that removes toner or the like on the surface of the photoconductor drum 31.

The image forming unit 30 also has a light exposure device 35 that performs light exposure on the photoconductor drum 31 of the image forming unit 30 by using laser beams. The light exposure method for the photoconductor drum 31 by the light exposure device 35 is not limited to the use of the laser beams. The light exposure may be performed on the photoconductor drum 31, for example, by using light emitted from a light source such as a light emitting diode (LED) provided on each image forming unit 30.

Each image forming unit 30 has the same configuration except toner contained in the developer 33. The image forming units 30Y, 30M, 30C, and 30K each form a corresponding one of yellow (Y), magenta (M), cyan (C), and black (K) toner images.

The image forming units 30T and 30P form a toner image by using toner corresponding to cooperate color, foaming toner for brail, fluorescent toner, toner for increasing gloss, or the like. In other words, the image forming units 30T and 30P form a toner image by using spot color toner.

The image forming part 20 also has an intermediate transfer belt 41 on which each color toner image formed on the corresponding photoconductor drum 31 of the corresponding image forming unit 30 is transferred.

Further, the image forming part 20 has a first transfer roller 42 by which the color toner image of the image forming unit 30 is transferred onto the intermediate transfer belt 41 at a first transfer part T1.

The image forming part 20 also has a second transfer roller 43 by which the color toner images transferred onto the intermediate transfer belt 41 are collectively transferred onto the sheet at a second transfer part T2.

Further, the image forming part 20 is provided with a belt cleaner 45 that removes the toner or the like on the surface of the intermediate transfer belt 41 and a fixing device 44 that fixes the image having undergone the second transfer onto the sheet.

The image forming part 20 performs an image forming operation on the basis of a control signal from the controller 21.

Specifically, image processing is first performed by the image processing part 22 on image data input from the image reading part 110, and the image data having undergone the image processing is supplied to the light exposure device 35 in the image forming part 20.

Subsequently, for example, in the image forming unit 30M for magenta (M), the surface of the photoconductor drum 31 is charged by using the charging roller 32, and then the laser beams modulated on the basis of the image data acquired from the image processing part 22 are radiated onto the photoconductor drum 31 by the light exposure device 35.

The electrostatic latent image is thereby formed on the photoconductor drum 31.

The electrostatic latent image thus formed is developed by the developer 33, and a magenta toner image is formed on the photoconductor drum 31.

Similarly, yellow, cyan, and black toner images are formed in the image forming units 30Y, 30C, and 30K, and spot color toner images are formed in the image forming units 30T and 30P.

Each color toner image formed in the corresponding image forming unit 30 serially undergoes electrostatic transfer onto the intermediate transfer belt 41 by the first transfer roller 42, the intermediate transfer belt 41 rotating in an arrow B direction in Fig. 3, and superimposed toner images are formed on the intermediate transfer belt 41.

The superimposed toner images formed on the intermediate transfer belt 41 are transported to the second transfer part T2 composed of the second transfer roller 43 and a backup roller 49 with the movement of the intermediate transfer belt 41.

Meanwhile, a sheet is taken out from, for example, a sheet container part (not illustrated), and is then transported to the position of registration rollers 74 via a transportation path.

In response to the superimposed toner images being transported to the second transfer part T2, the sheet is supplied from the registration rollers 74 to the second transfer part T2 in synchronization with the timing of the transportation to the second transfer part T2.

The superimposed toner images then undergo the electrostatic transfer on the sheet collectively at the second transfer part T2 due to action of a transfer electric field generated between the second transfer roller 43 and the backup roller 49.

Thereafter, the sheet on which the electrostatic transfer is performed on the superimposed toner images is transported to the fixing device 44.

In the fixing device 44, a process for fixing a toner image onto the sheet is executed in such a manner that pressing and heating is performed on the sheet having an unfixed toner image formed thereon under the control of the controller 21. The sheet having undergone the fixing process then passes through a curl correction part 81 provided in the discharging unit 100B and is thereafter transported to a sheet loading part (not illustrated).

In a case where images are to be formed on both sides of the sheet, the sheet turned over by a reversing mechanism 82 provided in the discharging unit 100B is supplied again to the second transfer roller 43. The toner images are thereby formed on both the front and back sides of the sheet.

In this exemplary embodiment, in the image diagnosis for the image forming apparatus 100 (see Fig. 1), the controller 21 first reads out a diagnostic image, for example, from the nonvolatile memory 11d of the server apparatus 200. The diagnostic image is an image used for the image diagnosis for the image forming apparatus 100 (see Fig. 1). The image forming part 20 is then operated to form a diagnostic image on the sheet on the basis of the diagnostic image. As denoted by reference numeral 1A in Fig. 1, a diagnostic sheet that is the sheet having the diagnostic image formed thereon is thereby generated.

After the diagnostic sheet is generated, as denoted by reference numeral 1B in Fig. 1, the diagnostic sheet is disposed on the image reading part 110. The diagnostic sheet having the diagnostic image formed thereon is then ready by the image reading part 110. A read image from the diagnostic sheet is thereby generated. The read image from the diagnostic sheet is an image for image diagnosis. In this exemplary embodiment, the read image from the diagnostic sheet is referred to as a chart image on occasions.

The chart image that is the read image is then transmitted to the server apparatus 200 and is stored in the server apparatus 200. The server apparatus 200 performs the image diagnosis in the image diagnosis system 1 on the basis of the chart image that is the read image.

In this exemplary embodiment, the user who uses the image diagnosis system 1 of this exemplary embodiment, such as a maintenance person who performs maintenance of the image forming apparatus 100 then accesses the server apparatus 200 and refers to the results of the diagnosis by the server apparatus 200.

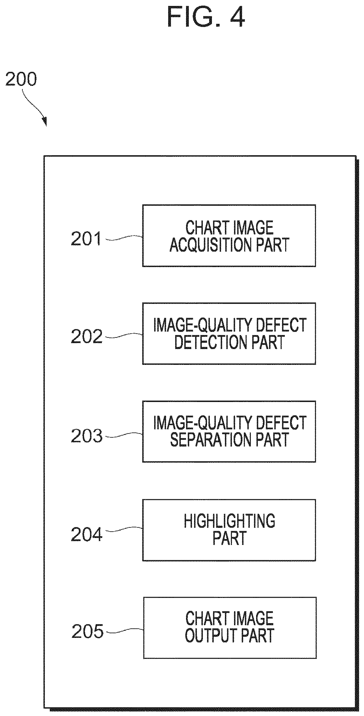

Fig. 4 is a view illustrating the functional configuration of the server apparatus 200. The server apparatus 200 has a chart image acquisition part 201, an image-quality defect detection part 202, an image-quality defect separation part 203, a highlighting part 204, and a chart image output part 205.

The chart image acquisition part 201 acquires an image read from a diagnostic sheet as a chart image from the image forming apparatus 100 illustrated in, for example, Fig. 1.

The image-quality defect detection part 202 detects image-quality defects from the chart image acquired from the chart image acquisition part 201. The image-quality defect detection part 202 detects the image-quality defects by comparing the diagnostic image, for example, in the nonvolatile memory 11d with the chart image. There are image-quality defects of multiple types according to an image-quality defect shape such as a dot or a streak.

The image-quality defect separation part 203 separates the image-quality defects detected by the image-quality defect detection part 202 according to the image-quality defect type. The image-quality defect separation part 203 also separates image-quality defects of one type according to the characteristics of the individual image-quality defects. As examples of the characteristics of the image-quality defects, the size of an image-quality defect and a cycle in which the image-quality defect occurs are cited. Information regarding each image-quality defect separated by the image-quality defect separation part 203 is stored, for example, in the nonvolatile memory 11d (see Fig. 2).

The image-quality defect separation part 203 also separates the image-quality defects detected by the image-quality defect detection part 202 according to the classifications of the image-quality defects. Each classification of the corresponding image-quality defect is the classification of a cause of the image-quality defect. Examples of the classification of the image-quality defect include a defect attributed to image forming and a defect attributed to reading. Details of these image-quality defects will be described later. For example, the type of an image-quality defect, the characteristic of an image-quality defects, and the classification of an image-quality defect may be automatically discriminated by using a machine learning model trained for information regarding detected image-quality defects.

The highlighting part 204 highlights the occurrence location of each image-quality defect separated by the image-quality defect separation part 203. The highlighting part 204 also performs switching of highlighting of the occurrence location of the image-quality defect on the basis of an event. The event denotes a condition of an image-quality defect detected from the chart image, and image-quality defects of multiple types detected from the chart image, multiple image-quality defects of one type, and the like are cited as the event.

For example, assume that image-quality defects of multiple types are detected from a chart image. In this case, the highlighting part 204 highlights one or more image-quality defects of one type among the image-quality defects of multiple types in such a manner as to discriminate the one or more image-quality defects of one type from the other image-quality defects of different types. In addition, for example, assume that multiple image-quality defects of one type are detected from a chart image. In this case, the highlighting part 204 highlights one of the multiple individual image-quality defects of one type in a switching manner.

The form of highlighting may depend on the characteristic of an image-quality defect of one type on the basis of the association between an image-quality defect and highlighting stored in the nonvolatile memory 11d. Association between an image-quality defect and highlighting serves as information in which information regarding an image-quality defect is associated with a form of highlighting of the image-quality defect. For example, the highlighting may be performed in such a manner as to discriminate the form of highlighting an image-quality defect of one type from the form of highlighting an image-quality defect of a different type. As the form of highlighting, a shape for highlighting such as a circle or a rectangle, a displaying color for highlighting, and the like are cited.

The chart image output part 205 outputs, to the user terminal 300, a chart image having the image-quality defect highlighted by the highlighting part 204. The chart image output part 205 also outputs the chart image having an image-quality defect not highlighted therein. The chart image output part 205 may also output information regarding the detected image-quality defect together with the chart image.

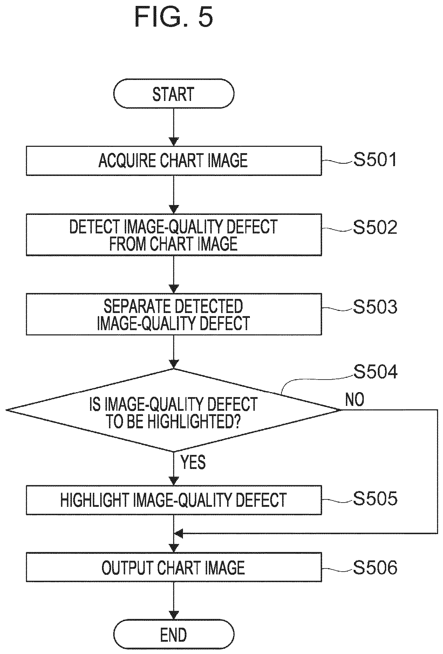

Fig. 5 is a flowchart illustrating a process by the server apparatus 200. First, the chart image acquisition part 201 (see Fig. 4) of the server apparatus 200 acquires a chart image from the image forming apparatus 100 (see Fig. 1) (step S501). The image-quality defect detection part 202 (see Fig. 4) of the server apparatus 200 then detects an image-quality defect from the chart image (step S502).

The image-quality defect separation part 203 (see Fig. 4) of the server apparatus 200 then separates the image-quality defect detected from the chart image (step S503). The server apparatus 200 then determines whether the image-quality defect is to be highlighted (step S504). If the image-quality defect is to be highlighted (YES in step S504), the highlighting part 204 (see Fig. 4) highlights the image-quality defect (step S505). The chart image output part 205 then outputs, to the user terminal 300 (see Fig. 1), the chart image having the image-quality defect highlighted therein (step S506). If the image-quality defect is not to be highlighted (NO in step S504), the chart image output part 205 outputs, to the user terminal 300, the chart image having the image-quality defect not highlighted therein (step S506).

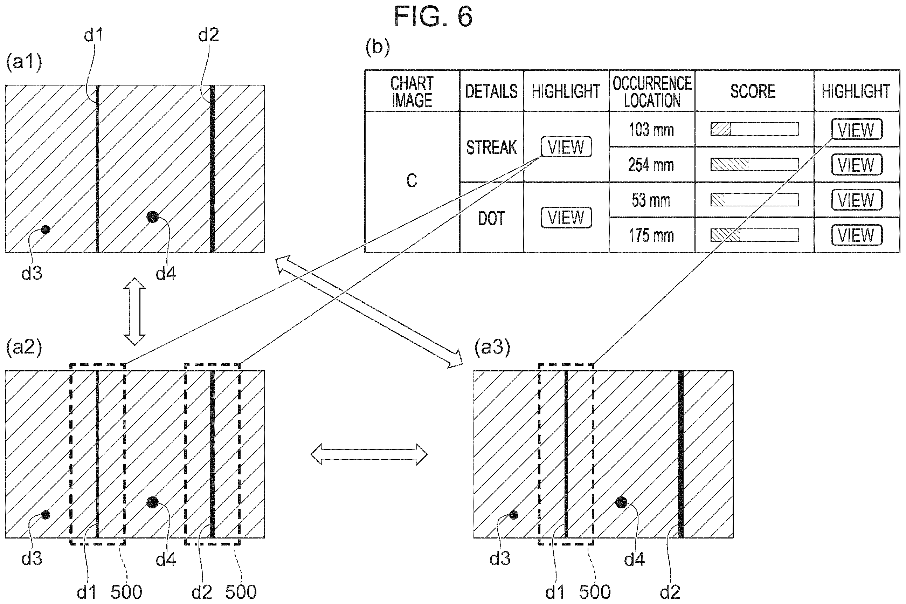

Fig. 6 illustrates diagnosis results output by the server apparatus 200 in (a1) to (b). Fig. 6 illustrates a chart image in each of (a1) to (a3). Fig. 6 illustrates, in (b), a table in which pieces of information regarding image-quality defects are registered. Fig. 6 assumes in (a1) to (b) that image-quality defects d1 and d2 are detected as linear image-quality defects in the chart image. Fig. 6 also assumes in (a1) to (b) that image-quality defects d3 and d4 are detected as dotlike image-quality defects in the chart image. In addition to these, a large number of linear defects and dotlike defects are detected; however, the illustration thereof is omitted.

Fig. 6 illustrates, in (a1), the chart image having the image-quality defects d1 and d2 not highlighted therein. Fig. 6 illustrates, in (a2), the chart image having the linear image-quality defects d1 and d2 both highlighted with highlighting 500. Fig. 6 illustrates, in (a3), the chart image having the image-quality defect d1 of the linear image-quality defects d1 and d2 highlighted with the highlighting 500.

In the table in (b) in Fig. 6, C is set as CHART IMAGE. The chart image C is a chart image in which a cyan (C) image is formed. STREAK and DOT are also set as DETAILS. STREAK and DOT each represent the type of a detected image-quality defect. In this exemplary embodiment, STREAK represents a linear image-quality defect, and DOT represents a dotlike image-quality defect. Further, buttons each describing VIEW are set as the first HIGHLIGHTING for each image-quality defect type. Although illustration is omitted, pieces of information regarding a large number of dotlike defects and linear defects are set in the table in (b) in Fig. 6.

In the table in (b) in Fig. 6, 103 mm, 254 mm, 53 mm, and 175 mm are each set as OCCURRENCE LOCATION of a corresponding one of the image-quality defects. In this exemplary embodiment, the image-quality defect occurring in the occurrence location "103 mm" is the image-quality defect d1, and the image-quality defect occurring in the occurrence location "254 mm" is the image-quality defect d2. In addition, the image-quality defect occurring in the occurrence location "53 mm" is the image-quality defect d3, and the image-quality defect occurring in the occurrence location "175 mm" is the image-quality defect d4.

Further, in the table in (b) in Fig. 6, a bar graph indicating the strength of the individual image-quality defects is set as SCORE. The strength of each image-quality defect is an index based on the size, the density, or the like of the image-quality defect. In Fig. 6, the higher the strength of the image-quality defect, the higher the score. In addition, buttons VIEW are set as the second HIGHLIGHTING for the respective image-quality defects.

In this exemplary embodiment, one of the chart images in (a1) to (a3) in Fig. 6 is output together with the table in (b) in Fig. 6 from the server apparatus 200 to the user terminal 300. The combined pieces of information are then displayed on the display 310 (see Fig. 1) of the user terminal 300 (see Fig. 1). Each of the chart images in (a1) to (a3) in Fig. 6 is switchable to another through operation by the user.

For example, assume that when the chart image in (a1) in Fig. 6 is displayed, the user selects the VIEW button for STREAK as the first HIGHLIGHTING. In this case, the displaying is switched from the chart image in (a1) in Fig. 6 to the chart image in (a2) in Fig. 6. The linear defects d1 and d2 are thereby highlighted in such a manner as to be discriminated from the dotlike defects d3 and d4 from among the image-quality defects of multiple types.

In addition, for example, assume that when the chart image in (a1) in Fig. 6 is displayed, the user selects the VIEW button for the image-quality defect d1 as the second HIGHLIGHTING. In this case, the displaying is switched from the chart image in (a1) in Fig. 6 to the chart image in (a3) in Fig. 6. The image-quality defect d1 is thereby highlighted separately from the linear defects d1 and d2 that are multiple image-quality defects of one type. In addition, by selecting the VIEW button for the image-quality defect d2 when the chart image in (a3) in Fig. 6 is displayed, the image-quality defect d2 may be highlighted in such a manner that switching is performed between the individual image-quality defects.

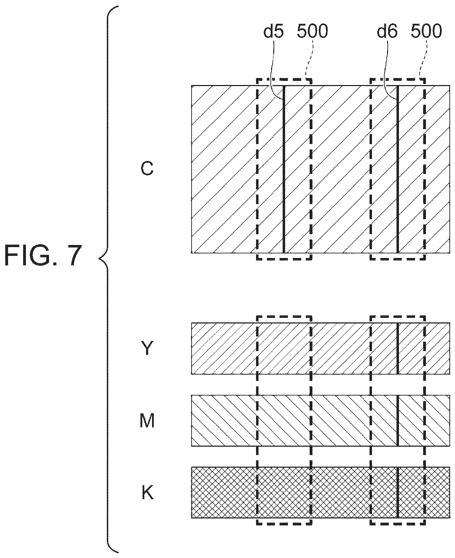

Fig. 7 is a view illustrating Modification 1 of the diagnosis results output by the server apparatus 200. In Fig. 7, chart images having respective cyan (C), yellow (Y), magenta (M), and black (K) images formed therein are used. Each of the cyan (C), yellow (Y), magenta (M), and black (K) chart images is an example of a specific image for discriminating an image-quality defect. Each chart image is also an example of an image related to image forming by the image forming apparatus 100 (see Fig. 1). Fig. 7 assumes that linear defects d5 and d6 serving as a defect attributed to image forming are detected in the chart images. Examples of the defect attributed to image forming include a line, a streak, unevenness, and toner smear on the sheet. The defect attributed to image forming occurs due to, for example, a defect on the surface of the photoconductor drum 31, toner adhesion during sheet transportation, or toner adhesion during image fixing.

In Fig. 7, the image-quality defect d5 is detected in the cyan (C) chart image, and the image-quality defect d5 is not detected in the yellow (Y), magenta (M), and black (K) chart images. The image-quality defect d6 is also detected in each of the cyan (C), yellow (Y), magenta (M), and black (K) chart images.

In Fig. 7, the highlighting 500 is displayed in each of the cyan (C), yellow (Y), magenta (M), and black (K) chart images. In the cyan (C) chart image, the highlighting 500 is displayed in such a manner that the image-quality defects d5 and d6 are surrounded by rectangles. In the yellow (Y), magenta (M), and black (K) chart images, the highlighting 500 is displayed in the same location as that of the highlighting 500 in the cyan (C) chart image.

In this exemplary embodiment, the server apparatus 200 (see Fig. 1) acquires, as an image for image diagnosis, a specific image for discriminating an image-quality defect, the image for image diagnosis being formed by the image forming apparatus 100 (see Fig. 1). The server apparatus 200 then separates, from the specific image, an image-quality defect in the specific image and displays and highlights discrimination information for discriminating the image-quality defect. For example, the server apparatus 200 (see Fig. 1) separates a defect related to image forming by the image forming apparatus 100 from defects in the chart image. The server apparatus 200 then displays information for discriminating the defect attributed to image forming as the discrimination information.

In Fig. 7, the server apparatus 200 (see Fig. 1) first separates the defects d5 and d6 attributed to image forming from the defects in the chart images in respective colors. The server apparatus 200 (see Fig. 1) then displays each color chart image as the discrimination information. The image-quality defect d5 is detected only in the cyan (C) chart image of these and is not detected in the chart images in the other colors, and thus it is discriminable that the image-quality defect d5 is a defect attributed to the formation of the image in cyan. In contrast, it is discriminable that the image-quality defect d6 occurring in each color chart image is a defect attributed to the formation of an image in a different color other than cyan. The color chart image thus serves as information for discriminating whether the defect is a defect attributed to the formation of an image in a specific color among the images in the respective colors or a defect also attributed to different image formation other than the formation of the image in the specific color.

In Fig. 7, the chart images in the respective colors are collectively displayed, but a chart image in a single color may also be displayed alone. Switching may also be performed from the chart image in the single color to a chart image in a different color. For example, the cyan (C) chart image may be displayed alone, and switching may be performed from the cyan (C) chart image to the magenta (M) chart image. The switching between the images may also be performed in Modifications 2 to 4 (described later).

In Fig. 7, the table in (b) in Fig. 6 may be displayed together with each color chart image. A character string may also be displayed as the discrimination information in the table in (b) in Fig. 6. For example, the character strings "a defect attributed to the formation of an image in cyan" and "a defect attributed to the formation of an image in a different color other than cyan" may be respectively displayed for the image-quality defect d5 and the image-quality defect d6 as DEFECT CLASSIFICATION in the column of the table in (b) in Fig. 6. The table in (b) in Fig. 6 and a character string as the discrimination information may also be displayed in Modifications 2 to 4 (described later).

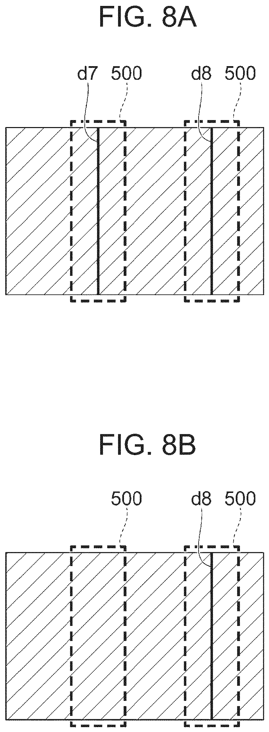

Figs. 8A and 8B illustrate Modification 2 of the diagnosis results output by the server apparatus 200. Fig. 8A illustrates a chart image having an image formed on both sides of a sheet. Fig. 8B illustrates a chart image having an image formed on one side. Figs. 8A and 8B each assume that linear defects d7 and d8 are detected as the defects attributed to image forming in the chart image. The chart image in Fig. 8A and the chart image in Fig. 8B are displayed together on the user terminal 300 (see Fig. 1).

The chart image having an image formed on one side of the chart image is simply referred to as a single-sided printed chart image on occasions. Further, the chart image having an image formed on both sides is simply referred to as a double-sided printed chart image on occasions. The single-sided printed chart image and the double-sided printed chart image are each an example of the specific image.

In the double-sided printed chart image in Fig. 8A, the image-quality defects d7 and d8 are both detected. In the double-sided printed chart image in Fig. 8A, the highlighting 500 is displayed for the image-quality defects d7 and d8. In the single-sided printed chart image in Fig. 8B, the image-quality defect d7 is not detected, and the image-quality defect d8 is detected. In the single-sided printed chart image in Fig. 8B, the highlighting 500 is displayed in the same location as in the double-sided printed chart image in Fig. 8A.

In this exemplary embodiment, the server apparatus 200 (see Fig. 1) displays, as the discrimination information, information for discriminating a defect attributed to the second transfer roller 43 by which images formed by image forming with multiple colors are collectively transferred onto the sheet. For example, in Figs. 8A and 8B, the double-sided printed chart image and the single-sided printed chart image are displayed together as the discrimination information. Of these, the image-quality defect d7 occurs in the double-sided printed chart image and does not occur in the single-sided printed chart image. If the second transfer roller 43 (see Fig. 3) has trouble such as dirt, a defect occurs on each of the printed side and the opposite side. If the double-sided printing is performed, a defect occurs on both sides. It is discriminable that the image-quality defect d7 occurring in the double-sided printed chart image is a defect attributed to the second transfer roller 43 by which images are collectively transferred onto the sheet. It is also discriminable that the image-quality defect d8 occurring in both of the double-sided printed chart image and the single-sided printed chart image is a defect attributed to a factor other than the second transfer roller 43.

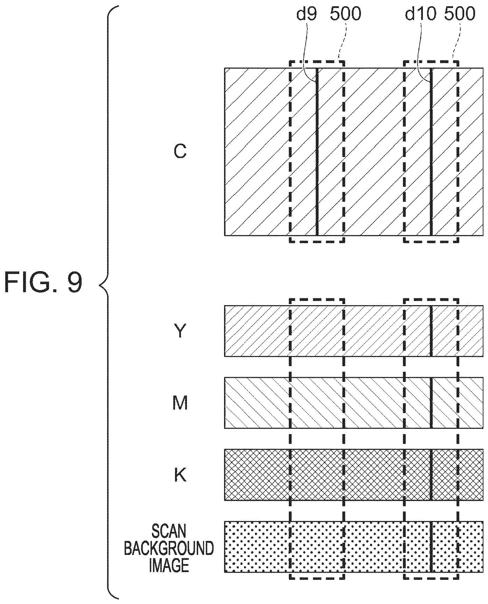

Fig. 9 is a view illustrating Modification 3 of the diagnosis results output by the server apparatus 200. In Fig. 9, a scan background image is displayed together with the color chart images explained with reference to Fig. 7. The scan background image is an image acquired, for example, when reading is performed without any sheet placed in the image reading part 110 (see Fig. 1). Fig. 9 assumes that an image-quality defect d9 is detected as a defect attributed to reading by the image forming apparatus 100 (see Fig. 1), and an image-quality defect d10 is detected as a defect attributed to a factor other than reading. Examples of the defect attributed to reading include dirt on the reading surface of a platen glass or a sensor and a defect of the sensor itself.

In Fig. 9, the image-quality defect d9 is detected in the cyan (C) chart image and is not detected in the yellow (Y), magenta (M), and black (K) chart images and the scan background image. In addition, the image-quality defect d10 is detected in each of the cyan (C), yellow (Y), magenta (M), and black (K) chart images and the scan background image.

In addition, in Fig. 9, the highlighting 500 is displayed in each of the cyan (C), yellow (Y), magenta (M), and black (K) chart images and the scan background image. In the cyan (C) chart image, the highlighting 500 is displayed in such a manner that the image-quality defects d9 and d10 are surrounded by rectangles. In the yellow (Y), magenta (M), and black (K) chart images and the scan background image, the highlighting 500 is displayed in the same location as that of the highlighting 500 in the cyan (C) chart image.

In this exemplary embodiment, the information for discriminating the defect attributed to reading by the image forming apparatus 100 is displayed as the discrimination information. For example, in Fig. 9, each color chart image and the scan background image are displayed together as the discrimination information on the user terminal 300. Of these, the image-quality defect d10 is detected in the scan background image. It is thus discriminable that the image-quality defect d10 is a defect attributed to reading by the image forming apparatus 100. In addition, the image-quality defect d9 is not detected in the scan background image. It is thus discriminable that the image-quality defect d9 is not the defect attributed to reading by the image forming apparatus 100.

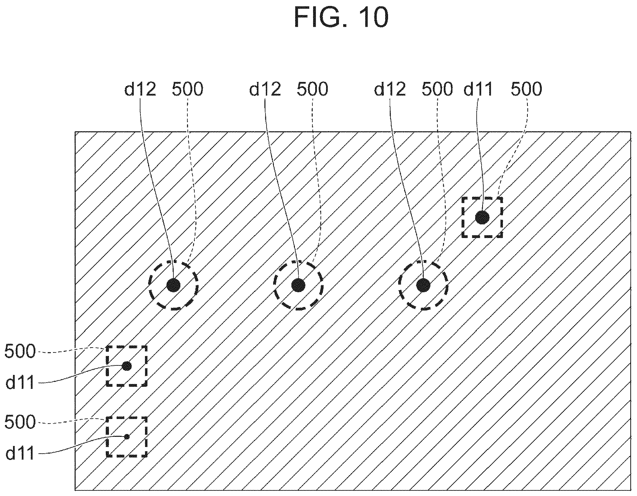

Fig. 10 is a view illustrating Modification 4 of the diagnosis results output by the server apparatus 200. Fig. 10 assumes that image-quality defects d11 and d12 are detected as dotlike defects. Multiple image-quality defects serve as the image-quality defects d11 and d12. The image-quality defects d11 have respective different sizes. The image-quality defects d12 are distributed cyclically. In Fig. 10, the multiple image-quality defects d11 are highlighted with the highlighting 500 in such a manner as to be surrounded by rectangles. In addition, in Fig. 10, the highlighting 500 is displayed in such a manner that the multiple image-quality defects d12 are surrounded by circles. As described above, the form of highlighting varies in Fig. 10 depending on the characteristics of the individual image-quality defects.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An image diagnosis system includes:
   one or more processors configured to:
   acquire an image for image diagnosis formed by an image forming apparatus serving as a diagnosis target;
   detect, from the image for image diagnosis, an image-quality defect in the image for image diagnosis; and
   perform switching of highlighting of an occurrence location of the detected image-quality defect, the switching being performed on a basis of an event.
(((2))) In the image diagnosis system according to (((1))),
   the event is one of multiple image-quality defects of multiple types, and
   the highlighting is performed of an image-quality defect of one type among the image-quality defects of the multiple types, and the image-quality defect of one type is discriminated from an image-quality defect of a different type in the highlighting.
(((3))) In the image diagnosis system according to (((1))) or (((2))), a form of the highlighting varies depending on a characteristic of the image-quality defect of one type.
(((4))) In the image diagnosis system according to (((1))),
   the event is one of multiple image-quality defects of one type, and
   the highlighting is performed of each of the multiple image-quality defects of one type in a switching manner.
(((5))) In the image diagnosis system according to (((4))), a form of the highlighting varies depending on a characteristic of the image-quality defect.
(((6))) In the image diagnosis system according to (((5))), the characteristic of the image-quality defect lies in a size of the image-quality defect.
(((7))) In the image diagnosis system according to (((5))), the characteristic of the image-quality defect lies in a cycle in which the image-quality defect is displayed.
(((8))) In the image diagnosis system according to (((1))),
   discrimination information for discriminating the image-quality defect is acquired as the image for image diagnosis formed by the image forming apparatus, and
   the discrimination information is displayed with the highlighting.
(((9))) In the image diagnosis system according to (((8))), the discrimination information is information for discriminating a defect attributed to formation of an image in a specific color among images in multiple colors or a defect attributed to different image formation other than the formation of the image in the specific color.
(((10))) In the image diagnosis system according to any one of (((8))) to (((9))), a single-sided printed image and a double-sided printed image serves as the discrimination information.
(((11))) In the image diagnosis system according to any one of (((8))) to (((10))), the discrimination information is information for discriminating a defect attributed to reading by the image forming apparatus.

According to the system in (((1))), a burden on a customer engineer in comprehending the image-quality defect may be reduced in the image diagnosis.

According to the system in (((2))), a user may easily pay attention on the image-quality defect of one type.

According to the system in (((3))), the image-quality defect may be uniquely identified for each type of the image-quality defect.

According to the system in (((4))), the user may easily pay attention on the individual image-quality defects.

According to the system in (((5))), a difference among the individual image-quality defects may be easily comprehended.

According to the system in (((6))), the user may be helped in comprehending the seriousness of the image-quality defect.

According to the system in (((7))), the user may easily verify that the image-quality defect occurs due to the same cause.

According to the system in (((8))), the user may easily comprehend an image-quality defect related to a specific image.

According to the system in (((9))), a defect attributed to the formation of the image in the specific color may be clarified more for the user.

According to the system in (((10))), the user may verify a defect attributed to a transfer part in a distinguished manner.

According to the system in (((11))), the user may verify a defect attributed to reading in a distinguished manner.

## Claims

1. An image diagnosis system comprising:
one or more processors configured to:
acquire an image for image diagnosis formed by an image forming apparatus serving as a diagnosis target;
detect, from the image for image diagnosis, an image-quality defect in the image for image diagnosis; and
perform switching of highlighting of an occurrence location of the detected image-quality defect, the switching being performed on a basis of an event.

2. The image diagnosis system according to claim 1,
wherein the event is one of a plurality of image-quality defects of a plurality of types, and
wherein the highlighting is performed of an image-quality defect of one type among the image-quality defects of the plurality of types, and the image-quality defect of one type is discriminated from an image-quality defect of a different type in the highlighting.

3. The image diagnosis system according to claim 1 or 2,
wherein a form of the highlighting varies depending on a characteristic of the image-quality defect of one type.

4. The image diagnosis system according to any one of the previous claims, in particular claim 1,
wherein the event is one of a plurality of image-quality defects of one type, and
wherein the highlighting is performed of each of the plurality of image-quality defects of one type in a switching manner.

5. The image diagnosis system according to any one of the previous claims, in particular claim 4,
wherein a form of the highlighting varies depending on a characteristic of the image-quality defect.

6. The image diagnosis system according to claim 5,
wherein the characteristic of the image-quality defect lies in a size of the image-quality defect.

7. The image diagnosis system according to either claim 5 or claim 6,
wherein the characteristic of the image-quality defect lies in a cycle in which the image-quality defect is displayed.

8. The image diagnosis system according to any one of the previous claims, in particular claim 1,
wherein discrimination information for discriminating the image-quality defect is acquired as the image for image diagnosis formed by the image forming apparatus, and
wherein the discrimination information is displayed with the highlighting.

9. The image diagnosis system according to claim 8,
wherein the discrimination information is information for discriminating a defect attributed to formation of an image in a specific color among images in a plurality of colors or a defect attributed to image different formation other than the formation of the image in the specific color.

10. The image diagnosis system according to any one of claims 8 to 9,
wherein a single-sided printed image and a double-sided printed image serves as the discrimination information.

11. The image diagnosis system according to any one of claims 8 to 10,
wherein the discrimination information is information for discriminating a defect attributed to reading by the image forming apparatus.

12. An image diagnosis method comprising:
acquiring an image for image diagnosis formed by an image forming apparatus serving as a diagnosis target;
detecting, from the image for image diagnosis, an image-quality defect in the image for image diagnosis; and
performing switching of highlighting of an occurrence location of the detected image-quality defect, the switching being performed on a basis of an event.
